# EUROPÄISCHE PATENTSCHRIFT

(11) **EP 3 214 387 B1**
(45) Veröffentlichungstag und Bekanntmachung des Hinweises auf die Patenterteilung: **26.09.2018**
(21) Anmeldenummer: 16158256.4
(22) Anmeldetag: 02.03.2016
(51) Int. Cl.: F24F 13/20, B01D 61/02, C02F 1/44, C02F 9/00, F24F 6/14

(54) **TRANSPORTABLES WASSERAUFBEREITUNGSGERÄT FÜR DIE LUFTBEFEUCHTUNG UND STATIONÄRER ANLAGENTEIL EINER LUFTBEFEUCHTUNG**
TRANSPORTABLE WATER TREATMENT DEVICE FOR HUMIDIFICATION AND STATIONARY PART OF THE HUMIDIFICATION DEVICE
APPAREIL DE PRÉPARATION D'EAU PORTATIF POUR L'HUMIDIFICATION DE L'AIR ET PARTIE STATIONAIRE DE L'HUMIDIFICATION

(43) Veröffentlichungstag der Anmeldung: 06.09.2017
(73) Patentinhaber: Draabe Industrietechnik GmbH, 22525 Hamburg (DE)
(72) Erfinder: De Boer, Michael,, 20099 Hamburg (DE); Reimann, Dirk, 22844 Norderstedt (DE); Bork, Torben, 20537 Hamburg (DE)
(74) Vertreter: Hauck Patentanwaltspartnerschaft mbB

(56) Entgegenhaltungen:
- EP-A1- 1 600 703
- DE-B4-102004 007 751
- US-A1- 2011 163 170

## Beschreibung

Die Erfindung betrifft ein transportables Wasseraufbereitungsgerät zur lösbaren Verbindung mit einem stationären Anlagenteil einer Luftbefeuchtungsanlage. Das Wasseraufbereitungsgerät stellt der Luftbefeuchtungsanlage aufbereitetes Wasser für die Luftbefeuchtung zur Verfügung.

In vielen Arbeitsumgebungen müssen bestimmte Luftfeuchtigkeiten eingehalten werden. In Büroräumen sollte die relative Luftfeuchtigkeit zwischen 40 % und 60 % liegen, vorzugsweise bei 50 %, um für die Beschäftigten ein optimales Klima einzuhalten. In Museen sind bestimmte Luftfeuchtigkeiten einzuhalten, um Gemälde und andere Kunstwerke optimal zu lagern. Viele Produktionsprozesse müssen zum Erreichen der geforderten Qualität bei einer bestimmten Luftfeuchtigkeit durchgeführt werden. Zum Einstellen einer optimalen Luftfeuchtigkeit werden Luftbefeuchtungsanlagen eingesetzt. Überwiegend sind dies Hochdruck-Düsenbefeuchter, die das zugeführte Wasser in kleinste Tröpfchen umwandeln und als Aerosol in dem zu befeuchtenden Raum oder anderen Umgebung vernebeln. Dort verdunsten die Tröpfchen und erhöhen die Luftfeuchtigkeit. Mittels einer Steuerung oder Regelung können die Hochdruckdüsen so lange betrieben werden, bis die geforderte relative Luftfeuchtigkeit erreicht ist.

Zur Förderung der Verdunstung und Vermeidung unerwünschter Nässebildung auf Oberflächen werden grundsätzlich möglichst kleine Tröpfengrößen angestrebt. Besonders kleine Aerosole werden mit speziellen Dralldüsen und einer Zerstäubung mit einem Druck von bis zu 100 bar erreicht.

Zur Vermeidung von Niederschlagsbelastungen durch Mineralien, Salze und andere Inhaltsstoffe und von Ablagerungen der Inhaltsstoffe an den Hochdruckdüsen wird das verwendete Wasser mittels einer Umkehrosmose-Wasseraufbereitung von störenden Inhaltsstoffen befreit. Vorzugsweise wird Leitungswasser aus dem öffentlichen Netz verwendet. Das verwendete Wasser wird vorzugsweise enthärtet, d.h. als "Weichwasser" der Umkehrosmose-Wasseraufbereitung zugeführt. Das durch Umkehrosmose teilentmineralisierte Wasser wird als "Reinwasser" bezeichnet.

Bei vielen Produktionsprozessen wird nur eine sehr geringe oder gar keine Niederschlagsbelastung der Produktionsumgebungen durch Mineralien aus dem zugeführten Wasser toleriert. Eine weitergehende Entmineralisierung ist mittels Ionenaustauschern möglich. Das durch Umkehrosmose und Ionenaustauscher entmineralisierte Wasser wird als "Reinstwasser" (vollentsalztes Wasser = VE-Wasser) bezeichnet. Das Reinstwasser hat keine oder eine nur sehr geringe elektrische Leitfähigkeit. Infolgedessen lädt sich der Aerosolstrom beim Verlassen der Hochdruckdüse elektrostatisch auf. Aufgeladene Tröpfchen werden von der Düse angezogen, wodurch Wasserschäden verursacht werden können.

Dieses Problem wird gemäß DE 10 2004 007 751 B4 durch Zusetzen eines die Leitfähigkeit erhöhenden Gases (z.B. CO₂) gelöst. Beim Zerstäuben des vollentmineralisierten Reinstwassers erhöhter Leitfähigkeit werden Niederschlagsbelastung und Tropfenbildung vermieden. Die DE 10 2004 007 751 B4 offenbart eine Anordnung zur Luftbefeuchtung mit einer Wasseraufbereitung umfassend eine Umkehrosmoseeinrichtung und ein Hochdruckpumpenmodul.

Das erforderliche Ausmaß der Entfernung von Inhaltsstoffen sowie der Mengenstrom und der Betriebsdruck des von der Luftbefeuchtungsanlage aufbereiteten Wassers hängen vom jeweiligen Einsatzfall ab.

Herkömmliche Luftbefeuchtungsanlagen sind offen montierte Systeme, die je nach den Anforderungen des Einzelfalles speziell zusammengesetzt und aufgebaut sind.

Luftbefeuchtungsanlagen müssen regelmäßig gewartet werden, um die Hygienestandards (Keim- und Bakterienfreiheit) einzuhalten und Verschleißteile auszutauschen. Der Service wird am Standort der Luftbefeuchtungsanlage vom Anwender selber oder durch anreisende Servicemonteure durchgeführt.

Bekannt ist auch schon, die Wasseraufbereitung betreffende Teile der Luftbefeuchtungsanlage in tragbaren Containern unterzubringen, die zwecks Wartung vom Anwender zum Hersteller versandt werden können. Das PerPur-Reinwassersystem der Draabe Industrietechnik GmbH ist ein Container, der mindestens eine Umkehrosmose-Einheit enthält. Das HighPur-Hochdrucksystem ist ein weiterer Container, der einen pulsierenden, hydraulischen Wasserfluss mit einem Druck von mindestens 75 bar erzeugt. Die SynPur-Leitwertsynthese ist ein optionaler Container, in dem das durch Umkehrosmose behandelte oder vollentsalzte Wasser konditioniert wird. Entsprechend den jeweiligen Anforderungen sind mehrere Container mit einer zugehörigen Peripherie zu einer Luftbefeuchtungsanlage kombinierbar.

Der Aufwand für den Service ist erheblich vermindert, da dieser beim Hersteller in entsprechend ausgerüsteten Werkstätten vorgenommen werden kann.

Davon ausgehend liegt der Erfindung die Aufgabe zugrunde, ein transportables Wasseraufbereitungsgerät zur Bereitstellung von aufbereitetem Wasser mit erhöhtem Druck für die Luftbefeuchtung zur Verfügung zu stellen, das eine Anpassung an den jeweiligen Einsatzfall und den Service weiter erleichtert.

Die Aufgabe wird durch ein modulares Wasseraufbereitungsgerät mit den Merkmalen von Anspruch 1 gelöst. Vorteilhafte Ausführungsarten des Wasseraufbereitungsgeräts sind in Unteransprüchen angegeben.

Das erfindungsgemäße transportable Wasseraufbereitungsgerät zum lösbaren Verbinden mit einem stationären Anlagenteil einer Luftbefeuchtungsanlage umfasst:
- einen Träger,
- mindestens eine am Träger gehaltene und von der Außenseite des Trägers aus zugängliche erste Schnittstelle zum Einspeisen und Auslassen von Fluid (Wasser und ggf. Gas), die ausgebildet ist, lösbar mit einer zweiten Schnittstelle an einem stationären Anlagenteil (Peripherie) einer Luftbefeuchtungsanlage verbunden zu werden,
- ein am Träger gehaltenes Umkehrosmosemodul,
- ein am Träger gehaltenes Niederdruckpumpenmodul,
- ein am Träger gehaltenes Hochdruckpumpenmodul,
- ein oberhalb des Umkehrosmosemoduls am Träger gehaltenes elektrisches Steuerungsmodul und
- wobei das Wasseraufbereitungsgerät als transportable Einheit ausgebildet ist.

Das erfindungsgemäße Wasseraufbereitungsgerät ist flexibel an den jeweiligen Einsatzzweck anpassbar. Je nach dem gewünschten Mengenstrom (z.B. 10 kg pro Stunde oder 80 kg pro Stunde) und dem gewünschten Betriebsdruck (z.B. 75 bar) des aufbereiteten Wassers ist es mit Modulen (Umkehrosmosemodul, Niederdruckpumpmodul, Hochdruckpumpmodul, Steuerungsmodul und optionale weitere Module) entsprechender Leistung bestückbar. In seiner einfachsten Ausbaustufe stellt das Wasseraufbereitungsgerät Reinwasser zur Verfügung. Das Wasseraufbereitungsgerät kann aber auch mit einem zusätzlichen Konditionierungsmodul ausgestattet und mit Ionenaustauscherpatronen kombiniert werden, um konditioniertes Reinstwasser zur Verfügung zu stellen. Das konditionierte Reinstwasser ist Reinstwasser mit durch CO₂ oder ein anderes Additiv erhöhter elektrischer Leitfähigkeit. Das Konditionierungsmodul kann ebenfalls wahlweise für verschiedene Mengenströme des aufbereiteten Wassers ausgelegt sein. Das elektrische Steuerungsmodul kann für sämtliche Ausbaustufen dasselbe oder ein an die jeweilige Ausbaustufe angepasstes Steuerungsmodul sein.

Durch den kompakten Aufbau des Wasseraufbereitungsgeräts ist es möglich, dieses als eine Einheit, vorzugsweise als einen einzigen Container, auszubilden und damit den jeweiligen Anwender anstatt mit zwei oder drei Containern auszustatten. Auch die Peripherie des Wasseraufbereitungsgeräts kann gegenüber herkömmlichen Ausführungen reduziert werden. Durch den modularen Aufbau des Wasseraufbereitungsgeräts ist es mit geringem Aufwand möglich, Kunden mit dem jeweils erforderlichen Ausstattungspaket auszurüsten.

Der Träger ist vorzugsweise bei sämtlichen Ausbaustufen identisch. Gemäß einer bevorzugten Ausführungsart umfasst der Träger ein Gestell. Gemäß einer weiteren Ausführungsart umfasst das Gestell eine horizontal ausgerichtete Bodenplatte und mindestens einen vertikal von dem Träger hochstehenden Rahmen. Die Bodenplatte kann massiv oder durch einen Rahmen mit Abdeckplatten gebildet sein. Gemäß einer bevorzugten Ausführungsart weist das Wasseraufbereitungsgerät ein Gehäuse auf, welches die Module abdeckt. Vorzugsweise ist das Gehäuse eine Abdeckhaube. Hierdurch wird eine Anordnung der Module des Wasseraufbereitungsgeräts ermöglicht, die nach Abnahme der Abdeckhaube oder Öffnen eines anderen Gehäuses besonders gut für den Service zugänglich ist.

Der innere Aufbau des Wasseraufbereitungsgeräts ist so ausgelegt, dass derselbe Träger für alle Ausbaustufen verwendet werden kann. Dies bringt den Vorteil einer kostengünstigen Produktion sowie eines einfachen Aufbaus für alle Anlagen. Sämtliche Ausbaustufen weisen denselben Grundaufbau auf, wobei lediglich die Module entsprechend der jeweiligen Ausbaustufe und Leistungsfähigkeit eingesetzt werden. Die Folge ist, dass die Servicetechniker nur auf einen Anlagentyp geschult werden müssen und die jeweilige Anlage intuitiv zusammenbauen können.

Der Aufwand für die Montage und Demontage des Wasseraufbereitungsgeräts ist im Wesentlichen unabhängig von der Ausbaustufe und vergleichsweise gering. Grundsätzlich müssen nur die ersten und zweiten Schnittstellen miteinander verbunden bzw. voneinander gelöst werden. Der Aufwand für den Transport zwischen Anwender und Hersteller ist ebenfalls gering, da bei jeder Ausbaustufe sämtliche Bauteile in einer einzigen Einheit zusammengefasst sind.

Das Wasseraufbereitungsgerät kann leicht in ein Komplettservicesystem integriert werden. Der Anwender schickt die Einheit in regelmäßigen Zeitabständen (z.B. alle sechs Monate) an den Hersteller zurück und erhält im Austausch ein überholtes Wasseraufbereitungsgerät. Durch die leicht demontierbare Abdeckhaube oder anderes Gehäuse sind direkt alle Module für den Service voll zugänglich. Dabei ist der Aufbau des Wasseraufbereitungsgeräts so gestaltet, dass oft zu wartende Komponenten leichter zugänglich sind als andere. Da annähernd identische Module verwendet werden, ist es leicht möglich, alle nötigen Daten mit der gleichen Servicesoftware auszulesen. Weiterhin ist hierdurch der Service von den Technikern einfacher durchzuführen.

Ein weiterer technischer Vorteil des Wasseraufbereitungsgeräts liegt in der Trennung von Hydraulik und Elektronik. Somit kann verhindert werden, dass bei einer Leckage elektronische Bauteile beschädigt werden.

Das Wasseraufbereitungsgerät kann von zwei oder mehr Personen getragen werden. Gemäß einer bevorzugten Ausführungsart beträgt das Gesamtgewicht des Wasseraufbereitungsgeräts maximal 50 kg, sodass es von zwei Personen getragen werden kann.

Gemäß einer weiteren Ausführungsart ist die Schnittstelle unten am Gestell gehalten und von der Unterseite des Gestells aus von außen zugänglich. Hierdurch ist es möglich, das Wasseraufbereitungsgerät auf eine bauseits montierte Tragkonsole mit einer zweiten Schnittstelle aufzusetzen, um es zu halten und mit der Peripherie der Luftbefeuchtungsanlage zu verbinden.

Gemäß einer weiteren Ausführungsart ist die erste Schnittstelle an der Bodenplatte gehalten. Durch die Abdeckhaube oder anderes Gehäuse in Kombination mit der Bodenplatte wird das Innere des Wasseraufbereitungsgeräts vor Umgebungseinflüssen geschützt. Gemäß einer weiteren Ausführungsart ist das Umkehrosmosemodul an der Bodenplatte gehalten. Gemäß einer weiteren Ausführungsart ist das Niederdruckpumpenmodul und das Hochdruckpumpenmodul jeweils oberhalb des Umkehrosmosemoduls am Rahmen gehalten. Gemäß einer bevorzugten Ausführungsart ist das Hochdruckpumpenmodul unterhalb des Niederdruckpumpenmoduls angeordnet.

Gemäß einer weiteren Ausführungsart ist das elektrische Steuerungsmodul oberhalb des Hochdruckpumpenmoduls am Rahmen gehalten.

Gemäß einer weiteren Ausführungsart ist am Gestell eine UV-Bestrahlungseinheit gehalten. Diese dient der Entkeimung des hergestellten Reinwassers oder Reinstwassers. Gemäß einer bevorzugten Ausführungsart ist die UV-Bestrahlungseinheit unten am Gestell gehalten, um sie von den elektrizitätsführenden Modulen zu trennen. Gemäß einer bevorzugten Ausführungsart ist die UV-Bestrahlungseinheit auf der Oberseite der Bodenplatte angeordnet.

Gemäß einer weiteren Ausführungsart ist am Träger ein vertikal ausgerichtetes, zylindrisches Konditionierungsmodul gehalten. Dieses ist eine optionale Ausbaustufe des Wasseraufbereitungsgeräts. Das Konditionierungsmodul führt dem Reinwasser oder Reinstwasser ein die Leitfähigkeit erhöhendes Gas (z.B. CO₂) oder anderes Additiv zu, um Aufladungen der Wassertröpfchen beim Vernebeln und Nässebildung unterhalb der Hochdruckdüsen zu vermeiden. Gemäß einer bevorzugten Ausführungsart ist das Wasseraufbereitungsgerät so ausgebildet, dass ein zylindrischer Freiraum für die optionale Montage eines vertikal ausgerichteten, zylindrischen Konditionierungsmoduls vorhanden ist. Bevorzugt ist der Freiraum an der Oberseite der Bodenplatte neben dem vertikal von der Bodenplatte hochstehenden Rahmen vorhanden. Bevorzugt beträgt sein Durchmesser 3 cm bis 15 cm. Gemäß einer bevorzugten Ausführungsart ist das Konditionierungsmodul an der Bodenplatte gehalten.

Gemäß einer weiteren Ausführungsart ist das Konditionierungsmodul eine Gegenstrom-Gasgemischeinheit mit einem Gaseinlass für Gas zum Konditionieren am unteren Ende, einem Gasauslass für das Gas am oberen Ende, einem Wassereinlass für zu konditionierendes Wasser am oberen Ende und einem Wasserauslass für konditioniertes Wasser am unteren Ende.

Gemäß einer weiteren Ausführungsart ist mindestens ein elektrischer Leitfähigkeitssensor am Träger gehalten. Der elektrische Leitfähigkeitssensor misst vorzugsweise die elektrische Leitfähigkeit des erzeugten Reinwassers oder Reinstwassers. Vorzugsweise sind mehrere elektrische Leitfähigkeitssensoren vorhanden, die die elektrische Leitfähigkeit des Wassers hinter den Ionenaustauschpatronen und hinter dem Konditionierungsmodul messen. Vorzugsweise ist das Wasseraufbereitungsgerät zur besseren Ausnutzung der Kapazität des Ionenaustauschers ausgebildet, wie in der europäischen Patentanmeldung 14 200 108.0 beschrieben.

Gemäß einer weiteren Ausführungsart umfasst das Niederdruckpumpenmodul eine Niederdruckpumpe und einen damit gekoppelten, elektrischen Antriebsmotor. Das Niederdruckpumpenmodul ist als Einheit am Träger montierbar und demontierbar. Dieses erleichtert Wartung und Austausch des Niederdruckpumpenmoduls.

Gemäß einer weiteren Ausgestaltung umfasst das Hochdruckpumpenmodul einen elektrischen Antriebsmotor und eine damit gekoppelte Hochdruckpumpe. Bei dieser Ausführungsart ist die Montage und Demontage des Hochdruckpumpenmoduls zum Zwecke der Wartung und der Austausch des Hochdruckpumpmoduls erleichtert.

Gemäß einer weiteren Ausführungsart ist das Umkehrosmosemodul und/oder das Hochdruckpumpenmodul und/oder das Niederdruckpumpenmodul zylindrisch und horizontal ausgerichtet. Hierdurch wird eine besonders kompakte Anordnung und gleichmäßige Gewichtsverteilung der Module des Wasseraufbereitungsgeräts ermöglicht.

Gemäß einer weiteren Ausführungsart sind mindestens eine der nachfolgenden Einrichtungen parallel zu einer langen Seite des Trägers angeordnet: Umkehrosmosemodul, Hochdruckpumpenmodul, Niederdruckpumpenmodul, UV-Bestrahlungseinheit, erste Schnittstelle.

Gemäß einer weiteren Ausführungsart ist das Hochdruckpumpenmodul und/oder das Niederdruckpumpenmodul mit einem Lüfter gekoppelt, der Luft an dem elektrischen Antriebsmotor des Hochdruckpumpenmoduls und/oder des Niederdruckpumpenmoduls vorbeifördert. Bevorzugt umfasst das Hochdruckpumpenmodul und/oder das Niederdruckpumpenmodul jeweils einen Lüfter. Der Lüfter dient zum Abtransport der von dem Antriebsmotor produzierten Wärme. Bevorzugt sind der Lüfter des Hochdruckpumpenmoduls und des Niederdruckpumpenmoduls angeordnet, ausgebildet und betrieben, sodass beide Lüfter Luft in dieselbe Richtung transportieren. Hierdurch wird der Wärmetransport verbessert. Die Förderrichtung der Lüfter wird durch ihre Anordnung am einen oder anderen Ende des Antriebsmotors, die Ausrichtung der Lüfterflügel und die Drehrichtung des Antriebsmotors bestimmt.

Gemäß einer weiteren Ausführungsart ist an einer Seitenwand des Gehäuses ein Absauglüfter gehalten, der Luft durch eine Öffnung in der Wand des Gehäuses hindurch aus dem Innenraum des Gehäuses heraus nach außen führt. Durch den Absauglüfter wird ein Wärmestau im Wasseraufbereitungsgerät vermieden. Bevorzugt ist der Absauglüfter oben an dem Gehäuse angeordnet, da sich die Wärme bevorzugt oben im Wasseraufbereitungsgerät ansammelt.

Gemäß einer weiteren Ausführungsart sind das Umkehrosmosemodul, das Hochdruckpumpenmodul und das Niederdruckpumpenmodul auf der einen Seite des Rahmens und das elektronische Steuerungsmodul sowie ein elektrisches Spannungsversorgungsmodul auf der anderen Seite des Rahmens angeordnet. Hierdurch wird eine gleichmäßige Gewichtsverteilung der Module innerhalb des Wasseraufbereitungsgeräts erreicht, wodurch das Tragen erleichtert wird.

Gemäß einer weiteren Ausführungsart umfasst die erste Schnittstelle eine Kupplung zum Verbinden mit dem Auslass einer Einspeiseeinrichtung zum Einspeisen von Einlasswasser, eine Kupplung zum Verbinden mit dem Einlass einer Wasserablaufeinrichtung für Wasser aus dem Umkehrosmosemodul, eine Kupplung zum Verbinden mit dem Einlass einer mindestens einen Vernebler enthaltenden Hochdruckringleitung und eine Kupplung zum Verbinden mit dem Auslass der Hochdruckringleitung.

Gemäß einer weiteren Ausführungsart umfasst die Schnittstelle mindestens eine Kupplung zum Verbinden mit dem Einlass einer Vollentsalzungseinheit und mindestens eine Kupplung zum Verbinden mit dem Auslass einer Vollentsalzungseinheit (Ionenaustauscherpatrone). Bei Wasseraufbereitungs-einheiten, die für kleinere Durchsätze (z.B. 10 kg pro Stunde) bestimmt sind, sind beispielsweise nur Kupplungen zum Verbinden mit einer Vollentsalzungseinheit vorhanden. Bei Wasseraufbereitungsgeräten für größere Durchsätze (z.B. 80 kg pro Stunde) sind beispielsweise Kupplungen zur Verbindung mit zwei Vollentsalzungseinheiten vorhanden.

Gemäß einer weiteren Ausführungsart weist die Schnittstelle eine Kupplung zum Verbinden mit einer Gasquelle für ein Gas zum Konditionieren des Wassers auf.

Vorstehend handelt es sich vorzugsweise jeweils um gesonderte Kupplungen.

Gemäß einer weiteren Ausführungsart sind die Kupplungen Schnellkupplungen, um Montage und Demontage des Wasseraufbereitungsgeräts zu erleichtern.

Gemäß einer weiteren Ausführungsart sind die Kupplungen zum Verbinden mit dem Auslass der Einspeiseeinrichtung, dem Einlass des Wasserablaufs, ggf. dem Einlass der Vollentsalzungseinheit und dem Auslass der Vollentsalzungseinheit und ggf. mit einer Gasquelle für Gas zum Konditionieren des Wassers in einer Gruppe angeordnet und sind die Kupplungen zum Verbinden mit dem Einlass der Hochdruckringleitung und dem Auslass der Hochdruckringleitung getrennt von der vorgenannten Gruppe Kupplungen angeordnet. Die Trennung erfolgt beispielsweise dadurch, dass zwischen den Kupplungen Abschirmungen (z.B. Trennwände) vorhanden sind und/oder die Kupplungen zur Verbindung mit der Hochdruckringleitung einen größeren Abstand von der Gruppe Kupplungen aufweist, als die Kupplungen aus der Gruppe voneinander haben.

Gemäß einer weiteren Ausführungsart sind die Kupplungen zumindest teilweise an einen Medienschlitten gehalten, der seinerseits am Gestell gehalten ist. In einem einfachen Fall ist der Medienschlitten eine Traverse, die an einer festen Position im Gestell gehalten ist, wobei von einer Seite der Traverse aus die Kupplungen zugänglich sind. Hierfür hat vorzugsweise der Rahmen oder die Bodenplatte neben den Aufsteckenden der Kupplungen eine Öffnung, durch die hindurch die Kupplungen von außen zugänglich sind.

Die Aufgabe wird ferner durch einen stationären Anlagenteil einer Luftbefeuchtungsanlage mit den Merkmalen von Anspruch 15 gelöst. Vorteilhafte Ausgestaltungen des stationären Anlagenteils einer Luftbefeuchtungsanlage sind in Unteransprüchen angegeben.

Der erfindungsgemäße stationäre Anlagenteil (Peripherie) einer Luftbefeuchtungsanlage umfasst:
- eine Tragkonsole, auf der ein modulares Wasseraufbereitungsgerät zur Bereitstellung von aufbereitetem Wasser für die Luftbefeuchtung platzierbar ist,
- eine zweite Schnittstelle, die an der Tragkonsole gehalten sind, um lösbar mit der ersten Schnittstelle des Wasseraufbereitungsgeräts verbunden zu werden,
- einen Wasserenthärter, der mit der zweiten Schnittstelle verbunden ist,
- eine Wasserablaufeinrichtung, die mit der zweiten Schnittstelle verbunden ist,
- ein Ausdehnungsgefäß, das mit der zweiten Schnittstelle verbunden ist,
- eine mindestens einen Vernebler enthaltende Hochdruckringleitung, die an den beiden Enden mit jeweils der zweiten Schnittstelle verbunden ist.

Hierbei ist der Aufwand für die stationäre Peripherie der Luftbefeuchtungsanlage vergleichsweise gering.

Gemäß einer bevorzugten Ausführungsart umfasst der stationäre Teil einer Luftbefeuchtungsanlage mindestens eine Vollentsalzungseinheit, wobei jede Vollentsalzungseinheit am Einlass und am Auslass mit der zweiten Schnittstelle verbunden ist.

Gemäß einer weiteren Ausführungsart umfasst der stationäre Teil der Luftbefeuchtungsanlage eine Gasquelle (z.B. eine Gasflasche), die mit der zweiten Schnittstelle verbunden ist.

Die zweite Schnittstelle weist gemäß einer bevorzugten Ausführungsart weitere Kupplungen, vorzugsweise weitere Schnellkupplungen, auf, die mit den Kupplungen des Wasseraufbereitungsgerätes verbindbar sind.

Vorstehend handelt es sich vorzugsweise jeweils um gesonderte weitere Kupplungen.

Vorzugsweise fällt jedoch die mit dem Ausdehnungsgefäß verbundene weitere Kupplung mit der mit dem Einlass einer Vollentsalzungseinheit verbundenen weiteren Kupplung zusammen.

Die Erfindung wird nachfolgend anhand der anliegenden Zeichnungen von Ausführungsbeispielen näher erläutert. In den Zeichnungen zeigen:
- Fig. 1: ein Wasseraufbereitungsgerät zur Herstellung von Reinwasser in einer Perspektivansicht schräg von vorn und von der Seite;
- Fig. 2: eine Luftbefeuchtungsanlage mit einem Wasseraufbereitungsgerät gemäß Fig. 1 in einer grobschematischen Ansicht;
- Fig. 3: ein Wasseraufbereitungsgerät zur Herstellung von Reinstwasser in einer Perspektivansicht schräg von vorn und von der Seite;
- Fig. 4: dasselbe Wasseraufbereitungsgerät in einer Perspektivansicht schräg von hinten und von der Seite;
- Fig. 5: dasselbe Wasseraufbereitungsgerät beim Aufsetzen einer Abdeckhaube;
- Fig. 6: dasselbe Wasseraufbereitungsgerät mit aufgesetzter Abdeckhaube;
- Fig. 7: eine Luftbefeuchtungsanlage mit einem Wasseraufbereitungsgerät gemäß Fig. 3 bis 6 in einer grobschematischen Ansicht.

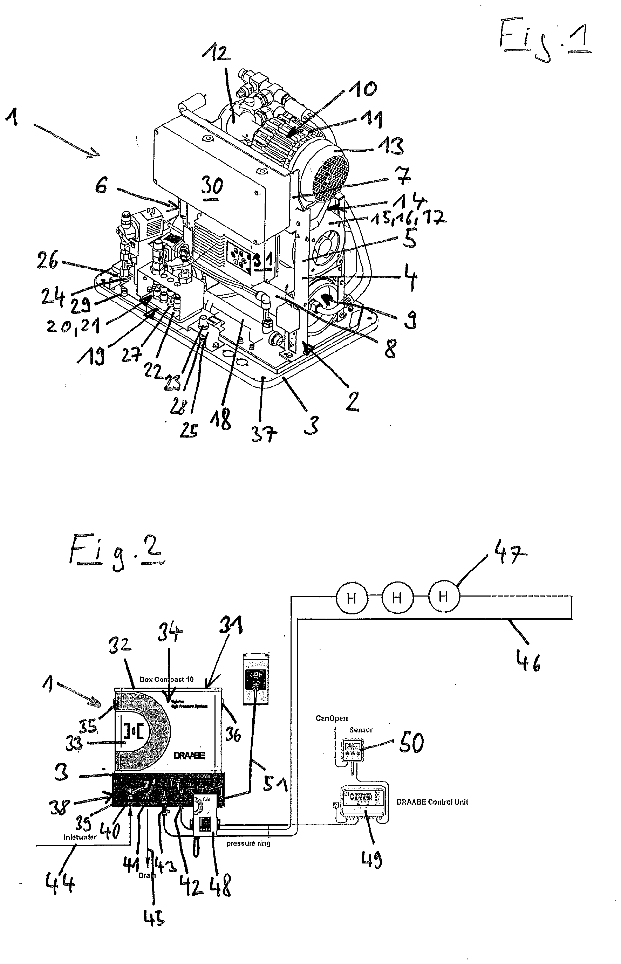

Gemäß Fig. 1 weist das Wasseraufbereitungsgerät 1 ein Gestell 2 mit einer Bodenplatte 3 und einem vertikal von der Bodenplatte hochstehenden Rahmen 4 auf.

Die Bodenplatte 3 ist rechteckig mit zwei längeren Seiten (Längsseiten) und zwei kürzeren Seiten (Querseiten).

Der Rahmen 4 umfasst zwei vertikale Rahmenteile 5, 6, die jeweils am Fuß an der Bodenplatte 3 fixiert sind. Ferner weist er zwei horizontale Rahmenteile 7, 8 auf, die seitlich an den vertikalen Rahmenteilen 5, 6 befestigt sind. Ein oberes horizontales Rahmenteil 7 ist an den oberen Enden der vertikalen Rahmenteile 5, 6 und ein unteres horizontales Rahmenteil 8 etwa auf ein Drittel der Höhe der vertikalen Rahmenteile 5, 6 befestigt.

Der Rahmen 4 ist parallel zu den Längsseiten der Bodenplatte 3 ausgerichtet, wobei er näher an der vorderen Längsseite als an der hinteren Längsseite angeordnet ist. Im Beispiel ist der Rahmen 4 etwa auf einem Drittel der Länge der Querseiten der Bodenplatte 3 angeordnet.

Auf der Bodenplatte 3 ist ein Umkehrosmosemodul 9 gehalten. Hierbei handelt es sich um eine etwa zylindrische Umkehrosmosepatrone. Das Umkehrosmosemodul 9 ist horizontal und parallel zur Längsseite der Bodenplatte 3 ausgerichtet. Das Umkehrosmosemodul 9 enthält eine Membran, durch die hindurch das zu reinigende Wasser gepresst wird. Das Permeat wird - ggf. nach weiterer Aufbereitung - für die Raumbefeuchtung herangezogen und das die Verunreinigungen enthaltende Retentat wird einem Wasserablauf zugeführt.

Am oberen Ende des Rahmens 4 ist ein Niederdruckpumpenmodul 10 gehalten. Das Niederdruckpumpenmodul ist parallel zum Umkehrosmosemodul 9 ausgerichtet. Das Niederdruckpumpenmodul umfasst einen elektrischen Antriebsmotor 11, eine mit dem einen Ende der Welle des Antriebsmotors 11 gekoppelte Niederdruckpumpe 12 und einen mit dem anderen Ende der Welle des Antriebsmotors 11 gekoppelten Lüfter 13. Das Niederdruckpumpenmodul 10 ist als bauliche Einheit ausgeführt und hat insgesamt eine etwa zylindrische Form.

Der Ausgang der Niederdruckpumpe 12 ist über einen Schlauch mit dem Umkehrosmosemodul 9 verbunden, um das der Niederdruckpumpe 12 zugeführte, aufzubereitende Wasser durch die Membran des Umkehrosmosemoduls 9 hindurch zu pumpen. Der Lüfter 13 des Niederdruckpumpenmoduls 10 fördert Kühlluft im Wesentlichen in horizontaler Richtung am Antriebsmotor 11 des Niederdruckpumpenmoduls 10 vorbei.

Zwischen dem Niederdruckpumpenmodul 10 und dem Umkehrosmosemodul 9 ist am Rahmen 4 ein Hochdruckpumpenmodul 14 gehalten. Das Hochdruckpumpenmodul 14 umfasst einen Antriebsmotor 15, dessen Welle an einem Ende mit einer Hochdruckpumpe 16 und am anderen Ende mit einem Lüfter 17 gekoppelt ist. Das Hochdruckpumpenmodul 14 ist ebenfalls als bauliche Einheit ausgebildet. Es hat insgesamt eine im Wesentlichen zylindrische Form. Auch das Hochdruckpumpenmodul 14 ist parallel zum Umkehrosmosemodul 9 ausgerichtet. Der Lüfter 17 des Hochdruckpumpenmoduls 14 ist auf derselben Seite wie der Lüfter 13 des Niederdruckpumpenmoduls 10 angeordnet.

Auf der Bodenplatte 3 ist eine UV-Bestrahlungseinheit 18 angeordnet. Hierbei handelt es sich im Wesentlichen um ein Rohr, das in einer Richtung von dem aufzubereitenden Wasser durchströmt wird und in dem eine UV-Lampe angeordnet ist. Das Rohr ist parallel zum Umkehrosmosemodul 9 auf der Bodenplatte 3 gehalten. Das Permeat aus dem Umkehrosmosemodul 9 wird mittels Schläuchen über die UV-Bestrahlungseinheit 18 dem Hochdruckpumpmodul 14 zugeführt. Die Hochdruckpumpe 16 ist ausgebildet, das Permeat unter erhöhtem Druck durch eine Ringleitung mit Verneblern hindurchzupumpen.

Der Lüfter 17 des Hochdruckpumpenmoduls 14 fördert Luft parallel an dem Antriebsmotor 15 des Hochdruckpumpenmoduls 14 vorbei, in derselben Richtung wie der Lüfter 13 des Niederdruckpumpenmoduls 10.

Das Wasseraufbereitungsgerät 1 weist eine erste Schnittstelle 19 mit mehreren Kupplungen 20, 21 auf. Eine Gruppe von Kupplungen 20, 21, die Flüssigkeit mit niederem Druck führen, sind baulich auf einer gemeinsamen Traverse 22 zusammengefasst. Zu dieser Gruppe Kupplungen 20, 21 gehört eine Kupplung 20 für das Zuführen von Einlasswasser und eine Kupplung 21 für das Ausgeben von Ablaufwasser. Die Traverse 22 weist weitere Plätze auf, die bei höheren Ausbaustufen des Wasseraufbereitungsgeräts 1 mit weiteren Kupplungen bestückbar sind.

Beidseitig der genannten Gruppe Kupplungen 20, 21 sind Kupplungen 23, 24 für Wasser unter hohem Druck auf eigenen Traversen 25, 26 angeordnet. An diese beiden Kupplungen 23, 24 sind der Einlass und der Auslass einer Hochdruckringleitung anschließbar.

Die Bodenplatte 3 hat gegenüber den vorerwähnten Kupplungen 20, 21, 23, 24 Öffnungen 27, 28, 29, durch die hindurch die Kupplungen 20, 21, 23, 24 zum Verbinden mit weiteren Kupplungen von der Unterseite der Bodenplatte 3 aus zugänglich sind.

Am oberen Ende des Rahmens 4 ist eine elektrische Steuerungseinrichtung 30 für die Antriebsmotoren 11, 16 und die UV-Bestrahlungseinheit 18 und darunter ein Frequenzumrichter zum Steuern des Antriebsmotors 15 des Hochdruckpumpenmoduls 14 sowie alle Aktoren (Magnetventile) und Sensoren (zum Ermitteln der Drücke) gehalten.

Die elektrische Steuerungseinrichtung 30 umfasst eine Spannungsversorgung, die an ein Netz mit einer Spannung von 220 Volt und alternativ 110 Volt anschließbar ist. Die Antriebsmotoren 11, 16 werden mit Netzspannung versorgt. Ferner stellt die elektrische Spannungsversorgung für Sensoren und Ventile eine Niederspannung von z .B. 24 Volt zur Verfügung.

Gemäß Fig. 2 ist das Wasseraufbereitungsgerät 1 von Fig. 1 mit einer Abdeckhaube 31 versehen. Die Abdeckhaube 31 hat oben eine Bodenwand 32, von der vier Seitenwände 33 nach unten vorstehen. Der untere Rand der Seitenwände 33 sitzt auf dem Rand der Bodenplatte 3 auf. Die Abdeckhaube 31 bildet gemeinsam mit dem Gestell 2 und den daran gehaltenen Bauteilen einen Container 34.

Das Wasseraufbereitungsgerät 1 ist ein transportabler Container 34. Die Abdeckhaube 31 ist an den beiden Querseiten mit Grifföffnungen 35, 36 versehen, die das Tragen des Containers 34 erleichtern.

Gemäß Fig. 1 hat die Bodenplatte 3 an den vier Ecken Schraubenlöcher 37, durch die hindurch Schrauben in Gewindelöcher an den Ecken der Abdeckhaube 31 eingeschraubt sind, um diese fest mit der Bodenwand 3 zu verbinden. Zur Demontage der Abdeckhaube 31 müssen lediglich die Schrauben gelöst werden.

Das Wasseraufbereitungsgerät 1 ist gemäß Fig. 2 auf eine Tragkonsole 38 mit einem horizontalen Tragrahmen aufgesetzt. Die Tragkonsole 38 umfasst eine zweite Schnittstelle 39 mit weiteren Kupplungen 40, 41, 42, 43, die mit den Kupplungen 20, 21, 23, 24 des Wasseraufbereitungsgeräts 1 verbindbar sind. Sämtliche Kupplungen 20, 21, 23, 24, 40, 41, 42 sind Schnellkupplungen.

An eine weitere Kupplung 40 ist eine Leitung 44 fest angeschlossen, über die Einlasswasser in das Wasseraufbereitungsgerät 1 eingespeist werden kann. Hierbei handelt es sich vorzugsweise um Weichwasser, das aus Leitungswasser (Stadtwasser) hergestellt wird.

Eine weitere Kupplung 41 ist mit einer Leitung 45 zur Kanalisation verbunden, die als Wasserauslass dient, um das Retentat abzuführen.

Zwei weitere Kupplungen 42, 43 sind mit den beiden Enden einer Hochdruckleitung 46 verbunden, in der mehrere Vernebler 47 angeordnet sind.

Ferner ist außen am Wasseraufbereitungsgerät 1 ein externes Bedienfeld 48 angeordnet.

Des Weiteren umfasst die Luftbefeuchtungsanlage eine externe Steuerungseinrichtung 49, sowie gegebenenfalls einen externen Sensor 50, der die Raumfeuchtigkeit umfasst.

Das Wasseraufbereitungsgerät 1 ist über ein elektrisches Netzkabel 51 mit dem Stromnetz verbunden.

Zu Wartungszwecken kann das Wasseraufbereitungsgerät 1 gegen ein frisch gewartetes Wasseraufbereitungsgerät 1 ausgetauscht und zum Hersteller versandt werden.

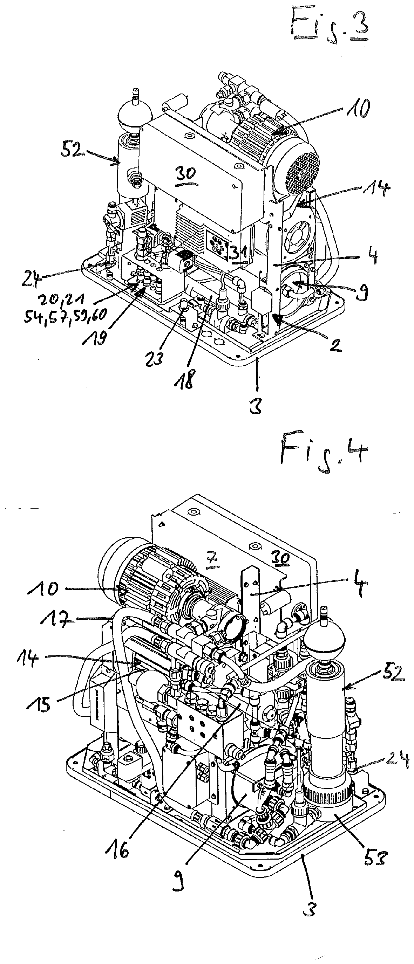

Gemäß Fig. 3 und 4 weist eine weitere Ausbaustufe des Wasseraufbereitungsgerätes 1 zusätzlich ein Konditionierungsmodul 52 auf. Das Konditionierungsmodul 52 umfasst eine Gegenstrom-Gasmischeinheit. Hierbei handelt es sich um ein Rohr mit einem Gaseinlass am unteren Ende, einem Gasauslass am oberen Ende, einem Wassereinlass am oberen Ende und einem Wasserauslass am unteren Ende. Die Bodenplatte weist einen freien Platz auf, auf dem eine Halterung 53 für die Gasmischeinheit angeordnet ist.

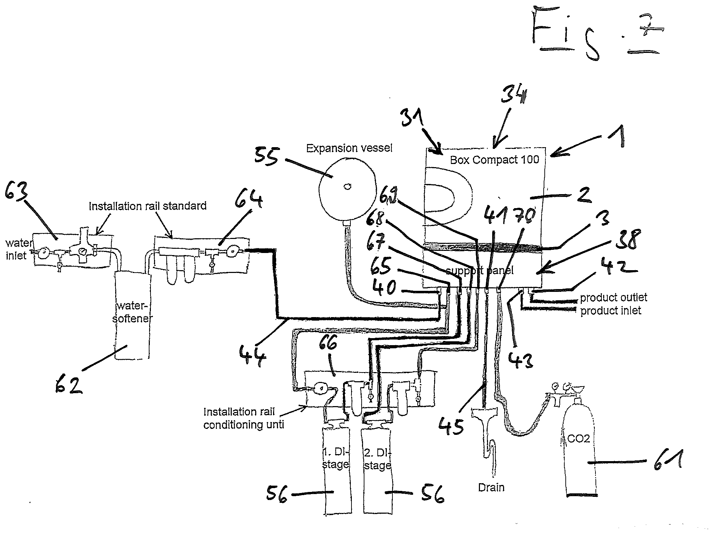

Das Umkehrosmosemodul 9 ist ausgangsseitig über eine Leitung mit einer Kupplung 54 verbunden. Diese dient der Herstellung einer Verbindung mit einem Expansionsgefäß 55 und einer Vollentsalzungseinheit 56 (Fig. 7). Eine Kupplung 57, die zur Verbindung mit dem Auslass der Vollentsalzungseinheit 56 (in Form einer oder mehrerer Ionenaustauscherpatronen) dient, ist im Wasseraufbereitungsgerät 1 über eine Leitung mit einer Kupplung 58 verbunden, die der Verbindung mit einer weiteren Vollentsalzungseinheit 56 (in Form einer oder mehrerer Ionenaustauscherpatronen) dient. Eine Kupplung 59 dient der Verbindung mit dem Auslass der weiteren Vollentsalzungseinheit 56 und ist über eine Leitung mit einem Leitfähigkeitsmessgerät verbunden. Vom weiteren Leitfähigkeitsmessgerät führt eine Leitung zum Wassereinlass des Konditionierungsmoduls 52. Der Wasserauslass des Konditionierungsmoduls 52 ist über eine Leitung mit einem weiteren Leitfähigkeitsmessgerät mit der UV-Bestrahlungseinheit 18 verbunden.

Der Gaseinlass des Konditionierungsmoduls 52 ist über eine Leitung mit einer Kupplung 60 verbunden, die der Verbindung mit einer Gasflasche 61 dient, die CO₂ enthält, um das Reinstwasser aus der zweiten Vollentsalzungsstufe zu konditionieren.

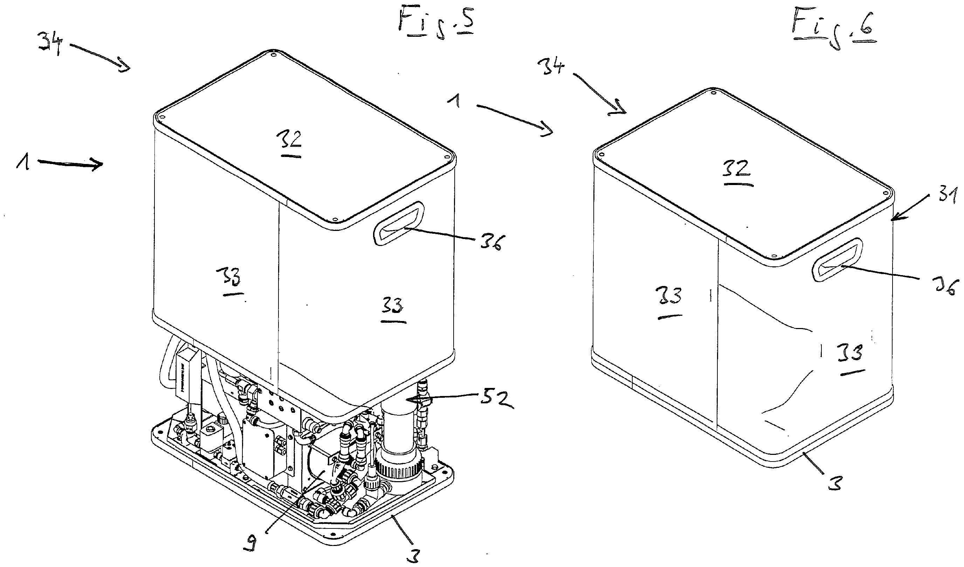

Die Figuren 5 und 6 zeigen das Wasseraufbereitungsgerät 1 beim Aufsetzen der Abdeckhaube 31 und mit aufgesetzter Abdeckhaube 31.

Gemäß Fig. 7 ist das Wasseraufbereitungsgerät in eine Luftbefeuchtungsanlage integriert. Der weiteren Kupplung 40 für den Wassereinlass wird Weichwasser aus einem Wasserenthärter 62 zugeführt. Das Stadtwasser wird über Manometer und Ventile, die an einer ersten Installationsschiene 63 gehalten sind, dem Wasserenthärter 62 zugeführt. Das Wasser aus dem Wasserenthärter 62 wird über einen Filter und Ventile, die an einer zweiten Installationsschiene 64 gehalten sind, der Leitung 44 zur weiteren Kupplung 40 zugeführt.

Gemäß Fig. 7 sind das Ausdehnungsgefäß 55 und die erste Vollentsalzungsstufe 56 an dieselbe weitere Kupplung 65 angeschlossen. Über ein Ventil und einen Filter auf einer dritten Installationsschiene 66 gelangt das Reinstwasser aus der ersten Vollentsalzungsstufe 56 zu einer weiteren Kupplung 67.

Von der weiteren Kupplung 67 gelangt nach der Leitfähigkeitsmessung das Wasser über eine weitere Kupplung 68 zur zweiten Vollentsalzungsstufe 56 und über ein weiteres, an der dritten Installationsschiene 66 gehaltenes Filter und Ventil zurück zu einer weiteren Kupplung 69.

CO₂ wird über die weitere Kupplung 70 zugeführt.

Die Installationsschienen 63, 64 sind ebenso wie das Ausdehnungsgefäß 55 und die Tragkonsole 38 an einer Wand befestigt.

Auch bei dieser Luftbefeuchtungsanlage ist der Container 34 leicht zu Wartungszwecken gegen einen frisch gewarteten Container 34 austauschbar.

## Patentansprüche

1. Transportables Wasseraufbereitungsgerät zum lösbaren Verbinden mit einem stationären Anlagenteil einer Luftbefeuchtungsanlage umfassend:
• einen Träger (2),
• mindestens eine am Träger (2) gehaltene und von der Außenseite des Trägers (2) aus zugängliche erste Schnittstelle (19) zum Einspeisen und Auslassen von Fluid, die ausgebildet ist, lösbar mit einer zweiten Schnittstelle an einem stationären Anlagenteil einer Luftbefeuchtungsanlage verbunden zu werden,
• ein am Träger (2) gehaltenes Umkehrosmosemodul (9),
• ein am Träger (2) gehaltenes Niederdruckpumpenmodul (10),
• ein am Träger (2) gehaltenes Hochdruckpumpenmodul (14),
• ein am Träger (2) gehaltenes elektrisches Steuerungsmodul (30),
• wobei das Wasseraufbereitungsgerät als transportable Einheit ausgebildet ist.

2. Wasseraufbereitungsgerät nach Anspruch 1, das einen vertikalen, zylindrischen Freiraum für die optionale Montage eines zylindrischen Konditionierungsmoduls (52) aufweist.

3. Wasseraufbereitungsgerät nach Anspruch 1 oder 2, umfassend ein an dem Träger gehaltenes zylindrisches Konditionierungsmodul (52) und/oder mindestens einen an dem Träger (2) gehaltenen elektrischen Leitfähigkeitssensor und/oder eine an dem Träger (2) gehaltene UV-Bestrahlungseinheit (18)

4. Wasseraufbereitungsgerät nach einem der Ansprüche 1 bis 3, bei dem das Umkehrosmosemodul (9), das Niederdruckpumpenmodul (10) und das Hochdruckpumpenmodul (14) jeweils eine zylindrische Form aufweisen und parallel nebeneinander angeordnet sind.

5. Wasseraufbereitungsgerät nach Anspruch 4, bei dem das Umkehrosmosemodul (9), das Niederdruckpumpenmodul (10) und das Hochdruckpumpenmodul (14) mit horizontalen Achsen übereinander oder mit vertikalen Achsen nebeneinander angeordnet sind.

6. Wasseraufbereitungsgerät nach einem der Ansprüche 1 bis 5, bei dem das elektrische Steuerungsmodul (30) kastenförmig und neben parallel nebeneinander angeordneten Modulen angeordnet ist.

7. Wasseraufbereitungsgerät nach einem der Ansprüche 1 bis 6, bei dem der Träger (2) ein Gestell (2) umfasst.

8. Wasseraufbereitungsgerät nach Anspruch 7, bei dem das Gestell eine Bodenplatte (3) und mindestens einen vertikal von der Bodenplatte (3) hochstehenden Rahmen (4) umfasst.

9. Wasseraufbereitungsgerät nach Anspruch 7 oder 8, wobei die erste Schnittstelle (19), das Umkehrosmosemodul (9), das Niederdruckpumpenmodul (10), das Hochdruckpumpenmodul (14), das elektrische Steuerungsmodul (30) und gegebenenfalls das Konditionierungsmodul (52) und/oder der elektrische Leitfähigkeitssensor und/oder die UV-Bestrahlungseinheit (18) am Gestell (2) gehalten ist.

10. Wasseraufbereitungsgerät nach Anspruch 9, bei dem das Niederdruckpumpenmodul (10) und das Hochdruckpumpenmodul (14) oberhalb des Umkehrosmosemoduls (9) am Gestell (2) gehalten sind und/oder bei dem das Niederdruckpumpenmodul (10) oberhalb des Hochdruckpumpenmoduls (14) angeordnet ist und/oder bei dem das Steuerungsmodul (30) oberhalb des Hochdruckpumpenmoduls (14) am Gestell (2) gehalten ist.

11. Wasseraufbereitungsgerät nach einem der Ansprüche 1 bis 10, bei dem das Hochdruckpumpenmodul (14) einen Lüfter (17) umfasst der Luft an dem elektrischen Antriebsmotor (15) des Hochdruckpumpenmoduls (14) vorbeifördert und/oder das Niederdruckpumpenmodul (10) einen weiteren Lüfter (12) umfasst, der Luft an den elektrischen Antriebsmotor (11) des Niederdruckpumpenmoduls (10) vorbeifördert.

12. Wasseraufbereitungsgerät nach einem der Ansprüche 1 bis 11, das einen das Umkehrosmosemodul (9), das Niederdruckpumpenmodul (10), das Hochdruckpumpenmodul (14), das elektrische Steuerungsmodul (30) und gegebenenfalls das Konditionierungsmodul (52) und/oder den elektrischen Leitfähigkeitssensor und/oder die UV-Bestrahlungseinheit (18) abdeckendes Gehäuse aufweist.

13. Wasseraufbereitungsgerät nach einem der Ansprüche 7 oder 12, bei dem auf das Gestell (2) eine Abdeckhaube (31) aufgesetzt ist.

14. Wasseraufbereitungsgerät nach Anspruch 12 oder 13, bei dem an einer Seitenwand des Gehäuses ein Absauglüfter gehalten ist, der Luft durch eine Öffnung in der Seitenwand des Gehäuses hindurch aus dem Innenraum des Gehäuses heraus nach außen fördert.

15. Stationärer Anlagenteil einer Luftbefeuchtungsanlage umfassend:
• eine Tragkonsole (38), auf der ein modulares Wasseraufbereitungsgerät (1) gemäß einem der Ansprüche 1 bis 14 zur Bereitstellung von aufbereitetem Wasser für die Luftbefeuchtung platzierbar ist,
• eine zweite Schnittstelle (39), die neben der Tragkonsole (38) gehalten ist, um lösbar mit der ersten Schnittstelle (19) des Wasseraufbereitungsgerätes (1) verbunden zu werden,
• einen Wasserenthärter (62), der mit der zweiten Schnittstelle (39) verbunden ist,
• eine Wasserablaufeinrichtung (45), die mit der zweiten Schnittstelle (39) verbunden ist,
• ein Ausdehnungsgefäß (55), das mit der zweiten Schnittstelle (39) verbunden ist,
• eine mindestens einen Vernebler (47) enthaltende Hochdruckringleitung (46), die an den beiden Enden mit der zweiten Schnittstelle (39) verbunden ist.

16. Anlagenteil gemäß Anspruch 15, umfassend mindestens eine Vollentsalzungseinheit (56), wobei jede Vollentsalzungseinheit (56) am Einlass und am Auslass mit der zweiten Schnittstelle (39) verbunden ist.

17. Anlagenteil gemäß Anspruch 15 oder 16, umfassend eine Gasquelle (61), die mit der zweiten Schnittstelle (39) verbunden ist.

18. Luftbefeuchtungsanlage umfassend ein Wasseraufbereitungsgerät (1) nach einem der Ansprüche 1 bis 14 und einem stationären Anlagenteil nach einem der Ansprüche 15 bis 17.

## Claims

1. A transportable water treatment device for detachably connecting to a stationary plant component of a humidification device, comprising:
• a carrier (2),
• at least one first interface (19) for feeding and draining fluid, which is secured to the carrier (2) and which is accessible from the outer side of the carrier (2), said first interface being configured to be detachably connected to a second interface on a stationary plant component of a humidification device,
• a reverse osmosis module (9) secured to the carrier (2),
• a low-pressure pump module (10) secured to the carrier (2),
• a high-pressure pump module (14) secured to the carrier (2),
• an electrical control module (30) secured to the carrier (2),
• wherein the water treatment device is configured as a transportable unit.

2. The water treatment device according to Claim 1, which has a vertical, cylindrical free space for the optional assembly of a cylindrical conditioning module (52).

3. The water treatment device according to Claim 1 or 2, comprising a cylindrical conditioning module (52) secured to the carrier and/or at least one electrical conductivity sensor secured to the carrier (2) and/or a UV irradiation unit (18) secured to the carrier (2).

4. The water treatment device according to any one of Claims 1 to 3, in which the reverse osmosis module (9), the low-pressure pump module (10) and the high-pressure pump module (14) each have a cylindrical form and are arranged parallel next to one another.

5. The water treatment device according to Claim 4, in which the reverse osmosis module (9), the low-pressure pump module (10) and the high-pressure pump module (14) are arranged with horizontal axes above one another or with vertical axes next to one another.

6. The water treatment device according to any one of Claims 1 to 5, in which the electrical control module (30) is arranged in a box shape and next to modules arranged parallel next to one another.

7. The water treatment device according to any one of Claims 1 to 6, in which the carrier (2) comprises a pedestal (2).

8. The water treatment device according to Claim 7, in which the pedestal comprises a bottom plate (3) and at least one frame (4) standing up vertically from the bottom plate (3).

9. The water treatment device according to Claim 7 or 8, wherein the first interface (19), the reverse osmosis module (9), the low-pressure pump module (10), the high-pressure pump module (14), the electrical control module (30) and, if applicable, the conditioning module (52) and/or the electrical conductivity sensor and/or the UV irradiation unit (18) are secured to the pedestal (2).

10. The water treatment device according to Claim 9, in which the low-pressure pump module (10) and the high-pressure pump module (14) are secured above the reverse osmosis module (9) to the pedestal (2) and/or in which the low-pressure pump module (10) is arranged above the high-pressure pump module (14) and/or in which the control module (30) is secured above the high-pressure pump module (14) to the pedestal (2).

11. The water treatment device according to any one of Claims 1 to 10, in which the high-pressure pump module (14) comprises a fan (17) which conveys air past the electrical drive motor (15) of the high-pressure pump module (14) and/or the low-pressure pump module (10) comprises a further fan (12) which conveys air past the electrical drive motor (11) of the low-pressure pump module (10).

12. The water treatment device according to any one of Claims 1 to 11, which has a housing covering the reverse osmosis module (9), the low-pressure pump module (10), the high-pressure pump module (14), the electrical control module (30) and, if applicable, the conditioning module (52) and/or the electrical conductivity sensor and/or the UV irradiation unit (18).

13. The water treatment device according to any one of Claims 7 or 12, in which a covering hood (31) is placed on the pedestal (2).

14. The water treatment device according to Claim 12 or 13, in which a suction fan is secured to one side wall of the housing, said suction fan conducting air through an opening in the side wall of the housing out of the interior space of the housing to the exterior.

15. A stationary plant component of a humidification device, comprising:
• a supporting bracket (38), on which a modular water treatment device (1) according to any one of Claims 1 to 14 can be positioned for providing treated water for the air humidification,
• a second interface (39), which is secured next to the supporting bracket (38), in order to be detachably connected to the first interface (19) of the water treatment device (1),
• a water softener (62) which is connected to the second interface (39),
• a water drainage device (45) which is connected to the second interface (39),
• an expansion vessel (55) which is connected to the second interface (39),
• a high-pressure ring line (46) containing at least one atomizer (47), said high-pressure ring line being connected at both ends to the second interface (39).

16. The plant component according to Claim 15, comprising at least one complete demineralization unit (56), wherein each complete demineralization unit (56) is connected at the inlet and outlet to the second interface (39).

17. The plant component according to Claim 15 or 16, comprising a gas source (61) which is connected to the second interface (39).

18. A humidification device comprising a water treatment device (1) according to any one of Claims 1 to 14, and a stationary plant component according to any one of Claims 15 to 17.

## Revendications

1. Appareil de préparation d'eau portatif destiné à être relié de façon détachable à une partie de système stationnaire d'un système d'humidification de l'air, comprenant :
• un support (2),
• au moins une première interface (19) maintenue sur le support (2) et accessible depuis le côté extérieur du support (2) pour l'introduction et l'évacuation de fluide, laquelle est conçue pour être reliée à une deuxième interface sur une partie de système stationnaire d'un système d'humidification de l'air,
• un module d'osmose inverse (9) maintenu sur le support (2),
• un module de pompe basse pression (10) maintenu sur le support (2),
• un module de pompe haute pression (14) maintenu sur le support (2),
• un module de commande électrique (30) maintenu sur le support (2),
• dans lequel l'appareil de préparation d'eau est conçu comme une unité portative.

2. Appareil de préparation d'eau selon la revendication 1, présentant un espace libre vertical cylindrique pour le montage optimal d'un module de conditionnement cylindrique (52).

3. Appareil de préparation d'eau selon la revendication 1 ou 2, comportant un module de conditionnement cylindrique (52) maintenu sur le support et/ou au moins un capteur de conductivité électrique maintenu sur le support (2) et/ou une unité de rayonnement UV (18) maintenue sur le support (2).

4. Appareil de préparation d'eau selon l'une des revendications 1 à 3, dans lequel le module d'osmose inverse (9), le module de pompe basse pression (10) et le module de pompe haute pression (14) présentent respectivement une forme cylindrique et sont disposés parallèlement les uns à côté des autres.

5. Appareil de préparation d'eau selon la revendication 4, dans lequel le module d'osmose inverse (9), le module de pompe basse pression (10) et le module de pompe haute pression (14) sont disposés les uns au-dessus des autres avec des axes horizontaux ou les uns à côté des autres avec des axes verticaux.

6. Appareil de préparation d'eau selon l'une des revendications 1 à 5, dans lequel le module de commande électrique (30) présente une forme d'armoire et se trouve à côté de modules disposés parallèlement les uns à côté des autres.

7. Appareil de préparation d'eau selon l'une des revendications 1 à 6, dans lequel le support (2) comporte un châssis (2).

8. Appareil de préparation d'eau selon la revendication 7, dans lequel le châssis comporte une plaque de fond (3) et au moins un cadre (4) s'étendant verticalement vers le haut à partir de la plaque de fond (3).

9. Appareil de préparation d'eau selon la revendication 7 ou 8, dans lequel la première interface (19), le module d'osmose inverse (9), le module de pompe basse pression (10), le module de pompe haute pression (14), le module de commande électrique (30) et le cas échéant le module de conditionnement (52) et/ou le capteur de conductivité électrique et/ou l'unité de rayonnement UV (18) sont maintenus sur le châssis (2).

10. Appareil de préparation d'eau selon la revendication 9, dans lequel le module de pompe basse pression (10) et le module de pompe haute pression (14) sont maintenus au-dessus du module d'osmose inverse (9) sur le châssis (2) et/ou dans lequel le module de pompe basse pression (10) est disposé au-dessus du module de pompe haute pression (14) et/ou dans lequel le module de commande (30) est maintenu au-dessus du module de pompe haute pression (14) sur le châssis (2).

11. Appareil de préparation d'eau selon l'une des revendications 1 à 10, dans lequel le module de pompe haute pression (14) comporte un ventilateur (12) faisant circuler de l'air devant le moteur d'entraînement électrique (15) du module de pompe haute pression (14) et/ou dans lequel le module de pompe basse pression (10) comporte un autre ventilateur (12) faisant circuler de l'air devant le moteur d'entraînement électrique (11) du module de pompe basse pression (10).

12. Appareil de préparation d'eau selon l'une des revendications 1 à 11, présentant un boîtier recouvrant le module d'osmose inverse (9), le module de pompe basse pression (10), le module de pompe haute pression (14), le module de commande électrique (30) et le cas échéant le module de conditionnement (52) et/ou le capteur de conductivité électrique et/ou l'unité de rayonnement UV (18).

13. Appareil de préparation d'eau selon l'une des revendications 7 à 12, dans lequel un capot de protection (13) est monté sur le châssis (2).

14. Appareil de préparation d'eau selon la revendication 12 ou 13, dans lequel un extracteur est maintenu sur une paroi latérale du boîtier, lequel transporte de l'air vers l'extérieur hors de l'espace intérieur du boîtier à travers une ouverture dans la paroi latérale du boîtier.

15. Partie de système stationnaire d'un système d'humidification de l'air, comportant :
• une console de support (38) sur laquelle peut être placé un appareil de préparation d'eau modulaire (1) selon l'une des revendications 1 à 14 pour la mise à disposition d'eau préparée pour l'humidification de l'air,
• une deuxième interface (39) maintenue à côté de la console de support (38) pour être reliée de façon détachable à la première interface (19) de l'appareil de préparation d'eau (1),
• un durcisseur d'eau (62) relié à la deuxième interface (39),
• un dispositif d'écoulement d'eau (45) relié à la deuxième interface (39),
• un réservoir d'expansion (55) relié à la deuxième interface (39),
• une conduite circulaire (46) contenant au moins un nébuliseur (47), laquelle est reliée à la deuxième interface (39) aux deux extrémités.

16. Partie de système selon la revendication 15, comportant au moins une unité de dessalement total (56), dans laquelle chaque unité de dessalement total (56) est reliée à la deuxième interface (39) à l'entrée et à la sortie.

17. Partie de système selon la revendication 15 ou 16, comportant une source de gaz (61) reliée à la deuxième interface (39).

18. Système d'humidification de l'air comportant un appareil de préparation d'eau (1) selon l'une des revendications 1 à 14 et une partie de système stationnaire selon l'une des revendications 15 à 17.
